# EUROPÄISCHE PATENTSCHRIFT

(11) **EP 0 773 159 B1**
(45) Veröffentlichungstag und Bekanntmachung des Hinweises auf die Patenterteilung: **02.09.1998**
(21) Anmeldenummer: 96111599.5
(22) Anmeldetag: 18.07.1996
(51) Int. Cl.: B65B 1/16, B65B 1/26, B65B 69/00

(54) **Verfahren zum Befüllen und Entleeren eines Behälters**
Method of filling and emptying a receptacle
Procédé de remplissage et de vidage d'un récipient

(30) Priorität: 21.07.1995 DE 19526743
(43) Veröffentlichungstag der Anmeldung: 14.05.1997
(73) Patentinhaber: Wacker-Chemie GmbH, 81737 München (DE)
(72) Erfinder: Maginot, Helmut, 84508 Burgkirchen (DE); Stadler, Franz, 84524 Neuötting (DE); Pfaffinger, Peter, 84508 Burgkirchen (DE); Hackbarth, Henry, 84508 Burgkirchen (DE); Lindhuber, Johann, 84561 Mehring/Öd (DE)
(74) Vertreter: Rimböck, Karl-Heinz, Dr.

(56) Entgegenhaltungen:
- EP-A- 0 033 832
- DE-A- 3 310 721
- DE-A- 4 220 651
- DE-C- 403 840
- DE-C- 629 178
- FR-A- 778 174
- US-A- 2 831 510
- US-A- 4 640 082

## Beschreibung

Gegenstand der Erfindung ist ein Verfahren zum mehrmaligen Befüllen und Entleeren eines Behälters mit schüttfähigem Gut mit geringer Schüttdichte.

Der Umgang mit schüttfähigen Stoffen mit extrem niedriger Schüttdichte bereitet in verschiedener Hinsicht Probleme. Sowohl die Hersteller als auch die Endverbraucher sind damit konfrontiert, daß solche Stoffe schon bei geringster Luftkonvektion Staub aufwirbeln. Die Staubentwicklung muß vermieden werden, um Personal, das mit dem Gut umgehen muß, vor gesundheitlichen Schäden durch Einatmen des Staubs zu bewahren. Darüber hinaus verursacht die geringe Schüttdichte erhöhte Transportkosten, weil das Verhältnis Gebindegewicht zu Füllgewicht groß ist und entsprechend viel Verpackungsmaterial benötigt wird.

Das Problem mit dem Verpackungsmaterial kann dadurch umgangen werden, daß als Transport-Behälter für das Gut ein Tanklastzug vorgesehen wird. Für den Endverbraucher bedeutet dies jedoch erhöhte Investitionskosten für notwendige Silo- und Förderanlagen für das Gut. Aus diesem Grund ist insbesondere für Abnehmer von kleinen Mengen des Gutes der Transport im Tanklastzug nicht praktikabel.

Das Verbringen des Gutes in luftdurchlässige Säcke und der Transport in solchen Säcken hat den Vorteil, daß das Gut beim Einsaugen in den Sack komprimiert wird und seine Fülldichte gegenüber der natürlichen Schüttdichte ansteigt. Durch den höheren Anteil des Gutes am Gebindegewicht verringern sich die Transportkosten. Allerdings stehen dieser Kostenersparnis ein Mehraufwand für die Beschaffung der Säcke und Kosten für deren Entsorgung gegenüber. Darüber hinaus ist es gängige Praxis, daS die Säcke zur Weiterverarbeitung des Gutes vom Personal des Endverbrauchers aufgeschnitten und leere Säcke gefaltet oder aufgerollt werden. Die dabei auftretende Staubentwicklung kann zwar durch Absaugvorrichtungen vermindert werden, setzt das Personal jedoch intensiver und unangenehmer Luftströmung aus.

Durch faltbare Mehrwegkartonagen mit Innensack wird zwar der Aufwand für Verpackungsmaterial verringert. Es bleibt jedoch das Problem der Staubaufwirbelung beim Zusammenfalten der entleerten Kartons. Die Transportkosten bleiben außerdem relativ hoch, weil das Gut beim Füllen der Kartons nicht verdichtet werden kann und deshalb sein Anteil am Gebindegewicht relativ gering ist.

In der US-2,831,510 ist eine Vorrichtung beschrieben, mit der Säcke mit feinem, pulverförmigen Material befüllt werden können.
Die Offenbarung der FR-778174 betrifft ein Verfahren zum Entleeren eines gefüllten Sackes.

Die Aufgabe der vorliegenden Erfindung bestand darin, ein Verfahren der genannten Gattung anzugeben, bei dem die geschilderten Probleme vermieden werden und das sich für eine weitgehende Automatisierung eignet.

Gelöst wird die Aufgabe durch ein Verfahren zum mehrmaligen Befüllen und Entleeren eines Behälters mit schüttfähigem Gut mit geringer Schüttdichte gemäß Anspruch 1.

Die Erfindung ermöglicht das staubfreie Befüllen und Entleeren des Behälters. Beim Befüllen wird das Gut ähnlich wie beim Abfüllen in Säcken verdichtet, ohne daß seine Struktur dabei zerstört wird. Durch das geringe Eigengewicht des Gewebecontainers ist der Anteil des Gutes am Gebindegewicht vergleichsweise hoch. Beim Entleeren des Gutes wird der Gewebecontainer auf einen Bruchteil seines ursprünglichen Volumens reduziert, was den Rücktransport des Gewebecontainers zum Hersteller des Gutes erleichtert. Die Mehrfachnutzung eines Gewebecontainers verringert die Kosten für die Beschaffung und Entsorgung der Gewebecontainer.

Das Verfahren eignet sich insbesondere zum Verpacken von pyrogen erzeugter Kieselsäure. Pyrogen erzeugte Kieselsäure weist eine äußerst geringe Schüttdichte von 20 bis 150 g/l auf und kann beim Einfüllen in den Gewebecontainer auf eine Fülldichte von 80 bis 170 g/l verdichtet werden. Es ist besonders bevorzugt, Gewebecontainer mit einer Kapazität von 90 bis 350 kg Füllgewicht zu verwenden.

Das Material, aus dem der Gewebecontainer gefertigt ist, muß flexibel und luftdurchlässig sein. Bevorzugt wird ein ein- oder mehrlagiges Kunststoffgewebe verwendet, das an den Nähten auch verstärkt sein kann. Der Gewebecontainer muß mindestens eine verschließbare, vorzugsweise schlauchförmige Zugangsöffnung zum Einfüllen und Entleeren des Gutes aufweisen. Bevorzugt sind zwei Zugangsöffnungen, eine Einfüllöffnung und eine öffnung zum Entleeren des Gewebecontainers.

Das Verfahren wird nachfolgend mit Hilfe von Figuren näher erläutert. Figur 1 zeigt in schematischer Darstellung das Befüllen eines Gewebecontainers. In Figur 2 ist eine Transportstraße zum automatischen Befüllen mehrerer Gewebecontainer dargestellt. Figur 3 zeigt eine bevorzugte Austragsvorrichtung zum Entleeren des Gewebecontainers.

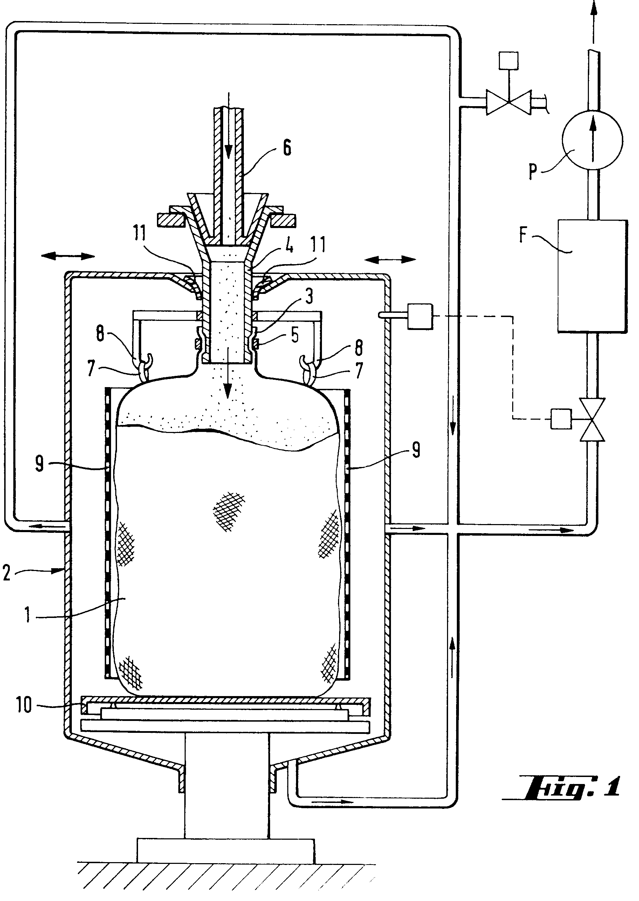

Der Gewebecontainer 1 befindet sich in einer Befüllstation 2, die sich in einer Freigabestellung oder in einer Befüllstellung befinden kann. In der Befüllstellung ist die Befüllstation geschlossen, wie es in Figur 1 gezeigt ist. In der Freigabestellung ist die Befüllstation mindestens so weit geöffnet, daß der Gewebecontainer hinein- oder heraustransportiert werden kann. Der Wechsel von der Befüllstellung in die Freigabestellung kann beispielsweise dadurch erfolgen, daß die Befüllstation aus zwei gegeneinander verfahrbaren Hälften besteht und diese Hälften in einer zangenartigen Bewegung aufeinander zu- oder voneinander fortbewegt werden.

In die Zugangsöffnung 3 des Gewebecontainers 1 ragt ein Füllanschluß 4. Der Zwischenraum zwischen der Innenseite der Zugangsöffnung und der Außenseite des Füllanschlusses wird von einem Spannverschluß 5 staubdicht verschlossen. Der Füllanschluß 4 ist nach oben hin trichterförmig erweitert und bietet Platz für einen formschlüssig einsetzbaren Füllaufsatz 6, der mit einem Vorratsbehälter für das schüttfähige Gut, beispielsweise einem Silo in Verbindung steht. Der Gewebecontainer ist mit den Ösen 7 in die Haken 8 des Füllanschlusses 4 eingehakt und steht von einem Stützkorb 9 gesichert auf einer Waage 10. Wenn sich die Befüllstation 2 in der Befüllstellung befindet, wird der Übergang zwischen dem Füllanschluß 4 und dem Gehäuse der Befüllstation durch Dichtlippen 11 abgedichtet.

Zum Befüllen des Gewebecontainers mit dem Gut wird zunächst der Füllaufsatz 6 in den Füllanschluß 4 eingeführt. Anschließend wird mit Hilfe einer mit einem Filter F gesicherten Pumpe P der Druck in der Befüllstation gegenüber dem Umgebungsdruck vermindert. Durch den sich aufbauenden Unterdruck wird Gut aus dem Vorratsbehälter in den Gewebecontainer gesaugt. Bei diesem Vorgang kann kein Staub nach außen dringen. Das Gut wird im Gewebecontainer in Abhängigkeit vom in der Befüllstation herrschenden Unterdruck verdichtet. Sobald das angestrebte Füllgewicht erreicht ist, wird der Druck in der Befüllstation dem Umgebungsdruck angeglichen und die Leitung zwischen dem Füllaufsatz und dem Vorratsbehälter durch ein Ventil verschlossen. Zum Abtransport des gefüllten Gewebecontainers wird der Füllaufsatz 6 angehoben, die Befüllstation 2 in die Freigabestellung gebracht und die Zugangsöffnung 3 des Gewebecontainers verschlossen. Die beschriebenen Vorgänge werden vorzugsweise über einen Rechner (nicht dargestellt) gesteuert.

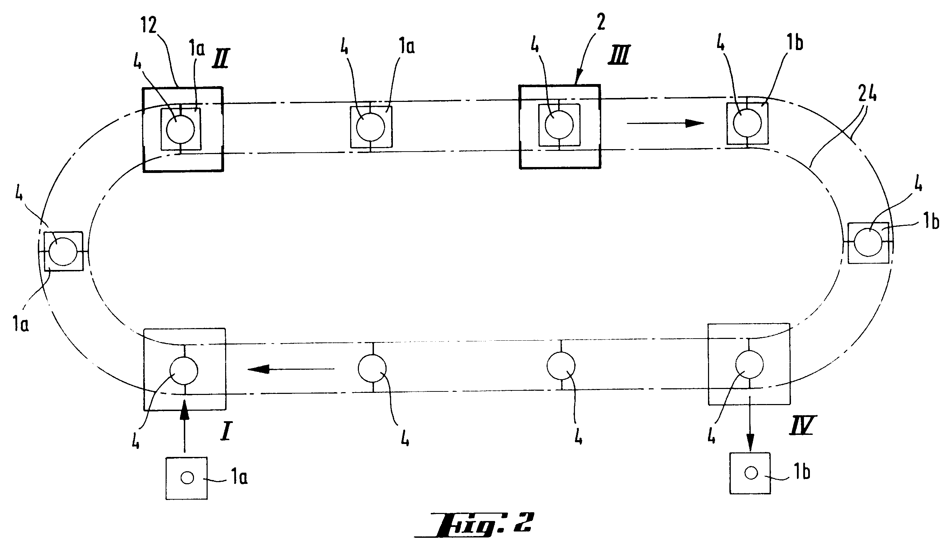

Eine Ausgestaltungsform der Erfindung sieht vor, daß die Befüllstation in eine Transportstraße, vorzugsweise in eine Hängebahn, eingegliedert ist, auf der ihr mehrere Gewebecontainer der Reihe nach zum Befüllen automatisch zugeführt werden. Ein Beispiel für eine solche Transportstraße ist in Figur 2 dargestellt. Die Figur zeigt in Aufsicht eine Hängebahn mit ringförmigem Schienensystem 24. Auf diesem Schienensystem sind mehrere Füllanschlüsse 4 gelagert, die im Uhrzeigersinn um das Schienensystem bewegt werden. Die Befüllstation 2 befindet sich in einer Abfüllzone III der Transportstraße. Die leeren Gewebecontainer 1a werden per Hand oder maschinell in einer Vorbereitungszone I an den Füllanschlüssen 4 eingehängt. Durch die Bewegung der Füllanschlüsse gelangen die Gewebecontainer nach einer gewissen Zeit in die Befüllstation 2. Gegebenenfalls kann zuvor der Durchlauf durch eine Zone II mit einer Reinigungsstation 12 vorgesehen sein, in der die Gewebecontainer gereinigt und einer Funktionsprüfung unterzogen werden. Das Einfüllen des Gutes in der Befüllstation 2 geschieht auf die oben geschilderte Weise, indem der in der Figur 2 nicht dargestellte Füllaufsatz in den Füllanschluß 4 eingefahren und die Befüllstation 2 in die Befüllstellung gebracht wird.

Die abgefüllten Gewebecontainer 1b bewegen sich auf dem Schienensystem weiter und erreichen schließlich eine Nachbereitungszone IV, in der die Zugangsöffnung des Gewebecontainers verschlossen, der Gewebecontainer vom Füllanschluß gehoben und beispielsweise auf einer Transportpalette für den Abtransport abgesetzt wird. Zweckmäßigerweise wird der gefüllte Gewebecontainer noch mit einer Bodefolie und einer mit dieser verschweißten Schrumpfhaube versehen, um ihn gegen Feuchtigkeit zu schützen. Der Füllanschluß 4 steht wieder für einen neuen Befüll-Zyklus, der mit dem Befestigen eines leeren Gewebecontainers beginnt, zur Verfügung.

Zum Entleeren wird eine Zugangsöffnung des Gewebecontainers, vorzugsweise eine eigens dafür vorgesehene Entleeröffnung, an eine Austragsvorrichtung angeschlossen. Bevorzugt ist eine schlauchförmige Entleeröffnung, in die die Austragsvorrichtung eingeführt werden kann. Die Austragsvorrichtung ist mit einer Saugeinrichtung, vorzugsweise einer Doppelmembranpumpe, verbunden. Das Füllgut wird dann mit Hilfe der Saugeinrichtung durch die geöffnete Zugangsöffnung in ein Depot oder in ein Rohrleitungssystem abgesaugt. Die Austragsvorrichtung ist vorzugsweise mit Mitteln ausgestattet, die das Belüften des Gewebecontainers und das Zerkleinern von kompaktiertem Gut erlauben.

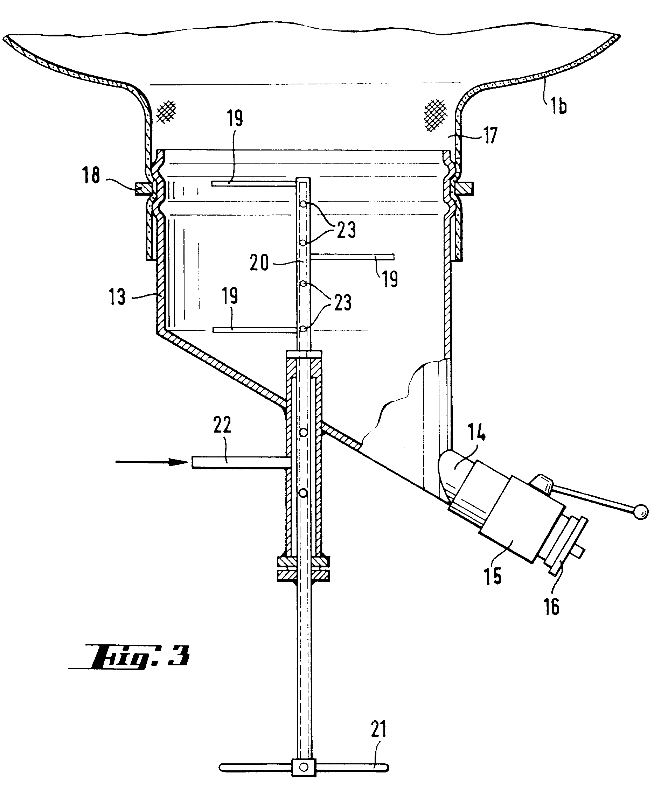

In Figur 3 ist eine bevorzugt verwendete Austragsvorrichtung schematisch dargestellt. Sie umfaßt einen rohrförmigen Aufsatz 13, der nach unten hin verjüngt ist und in einen Anschlußstutzen 14 mit Kugelhahn 15 und Schlauchkupplung 16 mündet. Der Anschlußstutzen ist durch einen Schlauch mit der in der Figur nicht dargestellten Saugeinrichtung verbunden. Die schlauchförmige Entleeröffnung 17 des gefüllten Gewebecontainers 1b ist über den Aufsatz 13 gestülpt und wird außen von einem Spannring 18 gehalten. Zweckmäßigerweise besitzt die Austragsvorrichtung Rührfinger 19, die an einem axial in den Aufsatz 13 ragenden Rohrgestänge 20 montiert sind und durch das Drehkreuz 21 bewegt werden können. Falls das Belüften des Gewebecontainers erforderlich ist, kann dies durch Einblasen von Druckluft in das Rohrgestänge 20 erfolgen, das zu diesem Zweck über einen Druckluftanschluß 22 und Austrittsbohrungen 23 verfügt.

Durch die Saugwirkung der Pumpe wird der schließlich geleerte Gewebecontainer soweit evakuiert, daß er sich zusammenfaltet und beispielsweise zusammengerollt werden kann. In diesem kompakten Zustand kann der Gewebecontainer dann nach dem Verschließen der Zugangsöffnung und dem Abkoppeln von der Pumpe an den Hersteller des Gutes zum Wiederbefüllen zurückgegeben werden. Bei der geschilderten Art der Entleerung wird praktisch kein Staub aufgewirbelt, der das an der Entleerung beteiligte Personal belasten könnte.

## Patentansprüche

1. Verfahren zum mehrmaligen Befüllen und Entleeren eines Behälters mit schüttfähigem Gut mit geringer Schüttdichte, bei dem als Behälter ein flexibler und luftdurchlässiger Gewebecontainer (1) mit mindestens einer Zugangsöffnung (3) bereitgestellt wird, und Füllgut zum Zweck des Befüllens des Gewebecontainers durch Beaufschlagen des Gewebecontainers mit Unterdruck durch eine geöffnete Zugangsöffnung in den Gewebecontainer gesaugt wird, bis ein vorbestimmtes Füllgewicht erreicht ist, und danach die Zugangsöffnung verschlossen wird, dadurch gekennzeichnet, daß der Gewebecontainer mit Füllgut befüllt wird, das eine Schüttdichte von 20 bis 150 g/l aufweist und ein Füllgewicht von 90 bis 350 kg hat, und eine zweite Zugangsöffnung zum Zweck des Entleerens des Gewebecontainers an eine Austragsvorrichtung (13) angeschlossen und geöffnet wird, und das Füllgut mit Hilfe einer Saugeinrichtung in ein Leitungssystem oder ein Depot gesaugt wird, bis der Gewebecontainer evakuiert ist und sich gefaltet hat, und danach die Zugangsöffnung wieder verschlossen wird.

2. Verfahren nach Anspruch 1, dadurch gekennzeichnet, daß das Füllgut pyrogen erzeugte Kieselsäure ist.

3. Verfahren nach Anspruch 1 oder Anspruch 2, dadurch gekennzeichnet, daß das Befüllen des Gewebecontainers rechnergesteuert in einer Befüllstation (2) erfolgt.

4. Verfahren nach Anspruch 3, dadurch gekennnzeichnet, daß die Befüllstation (2) in eine Transportstraße (24) eingebunden ist, auf der leere Gewebecontainer (1a) zum Befüllen antransportiert und mit dem Gut gefüllte Gewebecontainer (1b) zur Weiterbehandlung abtransportiert werden.

## Claims

1. Method for the multiple filling and emptying of a receptacle with pourable product having low bulk density, in which a flexible and air-permeable fabric container (1) with at least one access port (3) is provided as a receptacle, and for the purpose of filling the fabric container, filling product is sucked through an opened access port into the fabric container by loading the fabric container with negative pressure, until a predetermined filling weight is reached, and thereafter the access port is closed, characterized in that the fabric container is filled with filling product which has a bulk density of 20 to 150 g/l and a filling weight of 90 to 350 kg, and, for the purpose of emptying the fabric container, a second access port is connected to a discharge device (13) and is opened, and the filling product is sucked into a conduit system or a repository with the aid of a suction means, until the fabric container is evacuated and has folded up, and thereafter the access port is closed again.

2. Method according to Claim 1, characterized in that the filling product is pyrogenically produced silicic acid.

3. Method according to Claim 1 or 2, characterized in that the filling of the fabric container takes place in a filling station (2) by computer control.

4. Method according to Claim 3, characterized in that the filling station (2) is incorporated into a transport line (24), on which empty fabric containers (1a) are transported forwards for filling and fabric containers (1b) filled with the product are transported away for further treatment.

## Revendications

1. Procédé de remplissage et de vidage multiples d'un récipient avec un produit susceptible d'être versé ayant une faible densité en vrac, dans lequel on utilise, en tant que récipient, un contenant flexible et perméable à l'air (1) ayant au moins une ouverture d'accès (3), et dans lequel on aspire du produit de remplissage, par une ouverture d'accès ouverte dans le contenant en tissu, aux fins du remplissage du contenant en tissu, en appliquant une pression négative à ce dernier, jusqu'à ce qu'on obtienne un poids de remplissage prédéterminé, puis on ferme l'ouverture d'accès, caractérisé en ce que le contenant en tissu est rempli de produit de remplissage qui présente une densité en vrac de 20 à 150 g/l et a un poids de remplissage de 90 à 350 kg, et une deuxième ouverture d'accès aux fins de vider le contenant en tissu est raccordée à un dispositif de décharge (13) et ouverte, et le produit de remplissage est aspiré dans un système de conduite ou un dépôt au moyen d'un dispositif d'aspiration, jusqu'à ce que le contenant en tissu soit vide et se soit replié, puis l'ouverture d'accès est refermée.

2. Procédé selon la revendication 1, caractérisé en ce que le produit de remplissage est de l'acide silicique obtenu par pyrogénation.

3. Procédé selon la revendication 1 ou 2, caractérisé en ce que le remplissage du contenant en tissu s'effectue par commande par ordinateur dans un poste de remplissage (2).

4. Procédé selon la revendication 3, caractérisé en ce que le poste de remplissage (2) est incorporé à une chaîne de transport (24) sur laquelle des contenants en tissu (1a) sont amenés pour leur remplissage et des contenants en tissu (1b) remplis de produit sont emmenés en vue d'un traitement ultérieur.
